# EUROPÄISCHE PATENTANMELDUNG

(11) **EP 3 095 537 A1**
(43) Veröffentlichungstag der Anmeldung: **23.11.2016**
(21) Anmeldenummer: 15001571.7
(22) Anmeldetag: 22.05.2015
(51) Int. Cl.: B22D 2/00, B22D 11/043, B22D 11/16, G01N 21/954

(54) **PRÜFVORRICHTUNG, PRÜFSYSTEM UND VERFAHREN ZUM PRÜFEN EINER KOKILLE**

(71) Anmelder: Automation W+R GmbH, 80992 München (DE)
(72) Erfinder: Strobl, Franz, 80992 München (DE); Guttengeber, Egon, 80992 München (DE); Ganss, Robert, 80992 München (DE)
(74) Vertreter: Müller-Boré & Partner Patentanwälte PartG mbB

(57) **Zusammenfassung**

Eine Prüfvorrichtung (1) zum Prüfen einer Kokille (50) mit mehreren Innenwänden weist ein Gehäuse (10) auf, das durch die Kokille (50) bewegbar ist, und zumindest eine in dem Gehäuse (10) angeordnete Digitalkamera (13) zum Erzeugen von Bilddaten jeder Innenwand der Kokille (50), während das Gehäuse (10) im Inneren der Kokille (50) angeordnet ist.

## Beschreibung

Die Erfindung betrifft eine Prüfvorrichtung, ein Prüfsystem und ein Verfahren zum Prüfen einer Kokille.

Beim Gießen von Stahl in Blöcke oder Stangen wird flüssiger Stahl bei einer Temperatur von über 1200°C in eine wassergekühlte Kokille gegossen, in der der Stahl von außen nach innen abkühlt und sich verfestigt. Aus der typischerweise aus Kupfer ausgebildeten Kokille kommt unten ein außen fester und stabiler, innen noch flüssiger Stahlstrang heraus, der unmittelbar anschließend und im noch weichen Zustand aus der Vertikalen in die Waagrechte überführt wird. Diese Überführbewegung erfolgt entlang einer Bewegung auf einer Kreisbahn mit einem relativ großen Radius von zum Beispiel über 10m Radius.

In der Waagerechten kann der Stahlstrang in Knüppel und/oder Brammen geschnitten werden und einzeln abtransportiert werden. In einer solchen Stranggießanlage sind die Kokillen normalerweise im Wesentlichen in der Vertikalen angeordnet.

Eine solche Kokille kann typischerweise ca. 1 m lang ausgebildet sein und einen im Wesentlichen quadratischen Querschnitt mit einer Kantenlänge von z.B. 170mm aufweisen. Kokillen können einen leicht konischen Innendurchmesser aufweisen, da ein Stahlstrang beim Abkühlen schrumpft und die Kokillen sich an diese Formänderung anpassen sollen. Die Innenwände der kupfernen Kokillen können z.B. mit Nickel beschichtet sein. Diese oder eine ähnliche Beschichtung der Kokillen ist wichtig beim Gießen von Stahl und sollte idealerweise nicht beschädigt sein. Kokillen sind die beim Stranggießen mit am höchsten belasteten Bauteile, die zudem die Qualität des fertigen Produktes entscheidend beeinflussen. Deswegen ist eine Kontrolle der inneren Beschichtung wichtig für die Qualitätskontrolle des Stahlstrangs. Bislang werden die Kokillen im ausgebauten Zustand optisch geprüft, nachdem die Kokillen abgekühlt und getrocknet sind.

Der Erfindung liegt die Aufgabe zugrunde, eine verbesserte Möglichkeit zum Überprüfen einer Kokille bereitzustellen.

Diese Aufgabe wird durch die Gegenstände der unabhängigen Ansprüche gelöst. Bevorzugte Ausführungsformen sind die Gegenstände der abhängigen Ansprüche.

Ein erster Aspekt betrifft eine Prüfvorrichtung zum Prüfen einer Kokille mit mehreren Innenwänden mit einem Gehäuse, das durch die Kokille bewegbar ist, und zumindest einer in dem Gehäuse angeordneten Digitalkamera zum Erzeugen von Bilddaten jeder Innenwand der Kokille, während das Gehäuse im Inneren der Kokille angeordnet ist.

Die Prüfvorrichtung dient zum Prüfen einer Kokille der eingangs genannten Art. Die Überprüfung gilt insbesondere den Innenwänden der Kokille, insbesondere einer Beschichtung an den Innenwänden der Kokille. Mit den mehreren Innenwänden können zum Beispiel die vier nach innen zeigenden Wände einer im Querschnitt im Wesentlichen rechteckigen und/oder quadratischen Kokille betreffen. Die Prüfvorrichtung kann auch zum Prüfen einer runden Kokille ausgebildet sein.

Das Gehäuse der Prüfvorrichtung ist derart ausgebildet, dass es bequem in eine hohle Kokille einführbar ist und durch diese Kokille bewegbar ist. Dabei können die Außenmaße des Gehäuses an die Innenmaße der Kokille angepasst sein, also z.B. an eine im Querschnitt im Wesentlichen quadratische Kokille mit einer Innenkantenlänge von ca. 170mm. Für den Einsatz in einer im Wesentlichen quadratischen Kokille kann das Gehäuse im Querschnitt ebenfalls zumindest teilweise im Wesentlichen quadratisch ausgebildet sein. Für eine im Querschnitt rechteckige Kokille kann das Gehäuse im Querschnitt ebenfalls zumindest teilweise im Wesentlichen rechteckig ausgebildet sein usw. Das Gehäuse ist also zum Bewegen durch eine Kokille eines vorbestimmten Typs ausgebildet und vorgesehen. Zum prüfen einer runden Kokille kann das Gehäuse im Querschnitt im Wesentlichen kreisförmig ausgebildet sein.

Im Inneren des Gehäuses ist zumindest eine Digitalkamera angeordnet, die aus dem Gehäuse heraus und durch das Gehäuse geschützt Bilddaten von allen Innenwänden der Kokille erzeugt. Dazu kann das Gehäuse um ein Vielfaches größer als die Digitalkamera ausgebildet sein. Die Digitalkamera nimmt Bilder und/oder Videos der Innenwände auf, insbesondere der Innenbeschichtungen der Kokille. Die zumindest eine Digitalkamera ist dazu ausgebildet und vorgesehen, Bilddaten von allen Innenwänden der Kokille zu erzeugen, insbesondere von allen vier Innenwänden einer im Querschnitt im Wesentlichen rechteckigen und/oder quadratischen Kokille. Die Bilddaten werden von der zumindest einen Digitalkamera erzeugt, während das Gehäuse im Inneren der Kokille angeordnet ist. Dies kann insbesondere während der Bewegung durch die Kokille erfolgen. Die Bewegungsrichtung des Gehäuses durch die Kokille entspricht dabei im Wesentlichen auch der Gießrichtung des Stahlstrangs durch die Kokille.

Dabei kann das Gehäuse insbesondere in derselben Richtung durch die Kokille bewegt werden wie der Stahlstrang beim Gießen, also in Gießrichtung. Zusätzlich kann das Gehäuse auch noch entgegen dieser Gießrichtung durch die Kokille bewegt werden. So kann das Gehäuse einmal in die Kokille hinein vom Einlassende der Kokille bis zum Auslassende der Kokille und anschließend zurück vom Auslassende bis zum Einlassende der Kokille bewegt werden.

Die Prüfvorrichtung kann dazu ausgebildet und vorgesehen sein, die Kokille in einer Gießposition zu überprüfen, also in einer im Wesentlichen vertikal ausgerichteten Betriebsstellung der Kokille. Dabei bedeutet vertikal, dass das Einlassende der Kokille, also die Öffnung, durch die der Stahl in die Kokille hineingegossen wird, im Wesentlichen senkrecht über, also im Bezugssystem Erde vertikal über, dem Auslassende der Kokille angeordnet ist, an dem der noch weiche Stahlstrang nach unten aus der Kokille hinausbewegt wird.

Die Prüfvorrichtung kann dabei zum Beispiel für jede Innenwand eine eigens zugeordnete Digitalkamera in dem Gehäuse aufweisen, oder eine einzige Digitalkamera zum Erzeugen von Bilddaten aller z. B. vier Innenwände der Kokille, oder z.B. zwei Digitalkameras zum Aufnehmen von Bilddaten von jeweils zwei Innenwänden der Kokille. Alle Digitalkameras der Prüfvorrichtung sind dabei gemeinsam im Gehäuse angeordnet und erzeugen zusammen die Bilddaten der Innenwände der Kokille.

Die von der zumindest einen Digitalkamera erzeugten Bilddaten umfassen dabei zumindest Bilddaten von jeder Innenwand am Gießspiegel der Kokille. Der Gießspiegel der Kokille entspricht der Füllstandshöhe des Stahlstrangs, nachdem dieser in die Kokille hineingegossen wurde. Am Gießspiegel treten in der Kokille die heißesten Temperaturen und somit die stärkste Belastung der Kokille auf. Deswegen ist insbesondere eine Überprüfung der Kokilleninnenwände am Gießspiegel bei der Überprüfung der Kokillenqualität vorteilhaft.

Insbesondere können von der zumindest einen Digitalkamera Bilddaten von jeder vollständigen Innenwand der Kokille erzeugt werden, also Bilddaten vom Einlassende bis zum Ausgangsende jeder Innenwand.

Durch das Gehäuse ist die Digitalkamera geschützt und kann somit Bilddaten von den Innenwänden der Kokille erzeugen, bevor diese bis auf Raumtemperatur abgekühlt sind. Das Gehäuse schützt die Digitalkamera(s) dabei sowohl vor Hitze als auch vor Wasserdampf des Kühlwassers.

Die Prüfvorrichtung ist dazu ausgebildet und vorgesehen, das Gehäuse zum Überprüfen der Innenwände in Gießposition der Kokille durch die Kokille zu bewegen. So werden üblicherweise Stahlstränge ununterbrochen über eine Gießsequenz von ca. vier Stunden gegossen, gefolgt von einer kurzen, z.B. fünfzehnminütigen, Gießpause. In der Gießpause bleibt die Kokille in Gießposition, wird jedoch langsam abgekühlt. In der Gießpause kann die Prüfvorrichtung zum Überprüfen der Innenwände der Kokille genutzt werden, ohne den typischerweise verwendeten Gießzyklus (der sich aus den Gießsequenzen und den Gießpausen zusammensetzt) zu verlängern. Ohne die erfindungsgemäße Vorrichtung, also in herkömmlichen Gießverfahren, wird die Kokille nicht während einer solchen (z.B. fünfzehnminütigen) Gießpause überprüft, sondern lediglich, wenn der Gießvorgang vollständig unterbrochen ist und die Kokille aus der Gießposition heraus in eine horizontale Ruheposition bewegt worden ist.

Durch die Prüfvorrichtung wird ein Überprüfen der Kokillen in den Gießpausen zwischen zwei Gießsequenzen ermöglicht. Dabei kann ein Stahlverteiler über den Kokillen abgenommen werden, wodurch die Kokillen von oben von und für die Prüfvorrichtung frei zugänglich sind. In den Gießpausen sind die Kokillen jedoch immer noch heiß, insbesondere heißer als Raumtemperatur, z.B. bis zu 50°C. Zudem kann von dem Kühlwasser bei der Kühlung des Stranges unterhalb der Kokillen Wasserdampf durch die Kokille aufsteigen. Vor dieser Hitze und diesem Wasserdampf schützt das Gehäuse die zumindest eine Digitalkamera.

Durch die Prüfung können in den Gießpausen die Oberflächeneigenschaften im Inneren der Kokille und gegebenenfalls Veränderungen der Kokillenposition und der Kokillenabmessungen überprüft werden. Dabei kann bei einem erkannten Defekt der Kokille ein sofortiger Wechsel der Kokille veranlasst werden, wodurch eine Produktion von Stahlsträngen schlechter Qualität oder sogar Ausschuss vermieden wird. Zudem kann ein bisher regelmäßig nach z.B. 250 Gießsequenzen durchgeführter Wechsel der Kokillen bei Verwendung der Prüfvorrichtung abhängig vom Prüfungsergebnis erfolgen. Dadurch werden die Standzeiten, also die Nutzungszeiten der Kokillen in ihrer Gießposition, optimiert. Zudem können durch die wiederholt erzeugten Bilddaten nach jeder Gießsequenz Erkenntnisse über den Gießprozess gewonnen und ausgewertet werden, z.B. bei speziellen Stahlgütern und/oder nach Verwendung von speziellen Gießpulvern auftretende bestimmte Beschädigungen an der Kokillenwand.

Gemäß einer Ausführungsform weist die Prüfvorrichtung ein Umlenkelement zum Umlenken einer effektiven optischen Achse der zumindest einen Digitalkamera auf zumindest eine der Innenwände der Kokille auf. Die Ausrichtung der effektiven optischen Achse der Digitalkamera bestimmt dabei, von welcher Innenwand, genauer von welcher Position welcher Innenwand die Digitalkamera aktuell Bilddaten erzeugt. Die effektive optische Achse ist dabei diejenige optische Achse der Digitalkamera, die im Wesentlichen geradlinig auf eine Innenwand der Kokille trifft. Durch die Ausrichtung und Anordnung des Umlenkelements kann die effektive optische Achse der Digitalkamera genau justiert und/oder eingestellt werden. Das Umlenkelement kann dabei zumindest einen Spiegel und/oder zumindest ein Prisma aufweisen, oder als ein solcher und/oder solches ausgebildet sein. Ein solches Umlenkelement verbessert die Einstellung der effektiven optischen Achse der Digitalkamera und somit die Genauigkeit der erzeugten Bilddaten.

Insbesondere kann am Umlenkelement eine Ablenkung der optischen Achse der Digitalkamera um ca. 90° in Richtung der effektiven optischen Achse erfolgen. Dadurch kann die optische Weglänge der Digitalkamera verlängert werden und somit ein großer optischer Abstand der Digitalkamera zur Innenwand der Kokille erzeugt werden. Dadurch wird die Bildqualität erhöht, da zur Bildaufnahme im Inneren der engen Kokille z.B. keine Weitwinkelobjektive benötigt werden.

In einer Weiterbildung dieser Ausführungsform ist das Umlenkelement so verstellbar ausgebildet, dass die effektive optische Achse der zumindest einen Digitalkamera durch das Umlenkelement auf unterschiedliche Innenwände der Kokille umlenkbar ist, und zwar in Abhängigkeit von einer Einstellposition des Umlenkelements. Die Ausrichtung des Umlenkelements ist so verstellbar, dass die effektive optische Achse in einer ersten Einstellposition des Umlenkelements auf eine erste Innenwand der Kokille gerichtet ist, während die effektive optische Achse derselben Digitalkamera in einer zweiten Einstellposition des Umlenkelements auf eine andere Innenwand der Kokille gerichtet ist. Die Prüfvorrichtung kann dabei insbesondere eine Umlenkelementsteuerung aufweisen, über das die Einstellposition des Umlenkelements ansteuerbar und/oder regelbar ist. Die Prüfvorrichtung kann insbesondere so ausgebildet sein, dass die Einstellposition des Umlenkelements abhängig von einer Bewegungsrichtung des Gehäuses durch die Kokille ist. Durch Verwendung eines solchen verstellbaren Umlenkelements kann ein und dieselbe Digitalkamera zur Aufnahme von Bilddaten von zumindest zwei unterschiedlichen Innenwänden der Kokille verwendet werden. Dies spart einerseits die Anzahl von für die Prüfvorrichtung benötigten Digitalkameras, andererseits wird dadurch erheblich Platz eingespart innerhalb des Gehäuses. Dies ist besonders dann von Vorteil, wenn das Gehäuse dazu ausgebildet und vorgesehen ist, die Kokille möglichst vollständig zu durchfahren und dabei Bilddaten aller Innenwände der Kokille möglichst vollständig aufzunehmen.

In einer Weiterbildung der Ausführungsform mit dem Umlenkelement ist das Umlenkelement im Wesentlichen in der Mitte des Gehäuses angeordnet und/oder lenkt das Umlenkelement die effektive optische Achse im Wesentlichen im Lot auf die Innenwände der Kokille um. "Im Wesentlichen in der Mitte des Gehäuses" bedeutet dabei, dass das Umlenkelement an einer mittleren Position im Querschnitt (senkrecht zur Gießrichtung) angeordnet ist, z.B. im Wesentlichen in der Mitte der vier Innenwände der Kokille. An dieser Position hat das Umlenkelement einen maximalen Abstand von zumindest zwei, z.B. einander gegenüberliegenden, Innenwänden der Kokille. Dadurch können besonders günstige Bildaufnahmen mit einem großen Abstand zu diesen zwei Innenwänden erzeugt werden. Zudem ist es vorteilhaft, wenn das Umlenkelement die effektive optische Achse im Wesentlichen im Lot auf die Innenwände der Kokille lenkt. Auch dies trägt zur Qualität der erzeugten Bilddaten bei und erleichtert die anschließende Auswertung, da die Bilddaten der Innenwände nicht perspektivisch verzerrt sind. Das Umlenkelement kann eine oder beide dieser Anordnungen bzw. Ausrichtungen aufweisen, wodurch die Auswertung der Bilddaten erleichtert wird.

Gemäß einer Ausführungsform weist die Prüfvorrichtung zumindest oder genau zwei Digitalkameras auf, wobei jeder Digitalkamera ein verstellbares Umlenkelement zugeordnet ist zum Umlenken der effektiven optischen Achse der jeweiligen Digitalkamera auf zwei unterschiedliche Innenwände der Kokille. Typischerweise weisen Kokillen vier Innenwände auf. Bei Verwendung von zwei Digitalkameras zum Erzeugen von Bilddaten von jeweils zwei Innenwänden werden die Bauteile der Prüfvorrichtung besonders effektiv zum Erzeugen von Bilddaten aller vier Innenwände der Kokille genutzt. So kann jeweils eine der Digitalkameras mit zugeordnetem verstellbaren Umlenkelement als erste Aufnahmeeinheit zur Aufnahme von Bilddaten zweier gegenüberliegender oder nebeneinander angeordneter Innenwände dienen, und eine zweite solche Aufnahmeeinheit zum Erzeugen von Bilddaten der übrigen zwei Innenwände. Zur Feinjustierung kann jede dieser beiden Aufnahmeeinheiten weitere Umlenkelemente und/oder optische Bauteile zur Beeinflussung der Aufnahmeoptik aufweisen. Die Aufnahmeeinheiten können als separate, aber bauähnliche Gehäuseeinheiten des Gehäuses ausgebildet sein.

In dieser Ausführungsform kann z.B. jede Digitalkamera Bilddaten von jeweils einer Innenwand bei der Bewegung des Gehäuses in eine erste Bewegungsrichtung durch die Kokille aufnehmen, und von einer anderen Innenwand bei der Bewegung des Gehäuses in die Gegenrichtung, also in eine zweite Bewegungsrichtung. Dadurch werden beim Ein- und Ausführen des Gehäuses in und aus der Kokille Bilddaten von allen vier Innenwänden der Kokille erzeugt.

Gemäß einer Ausführungsform ist die zumindest eine Digitalkamera als Zeilenkamera ausgebildet. Bevorzugt können alle Digitalkameras der Prüfvorrichtung als Zeilenkameras ausgebildet sein. Zeilenkameras können besonders gut auf die länglichen Innenwände gerichtet werden, wobei ein fester Zusammenhang zwischen der Position des von der Zeilenkamera aktuell aufgenommenen Bilddaten und der Position des Gehäuses im Inneren der Kokille besteht und/oder herstellbar ist. Bei Verwendung von Zeilenkameras kann somit besonders gut ein zusammengesetztes Bild der Innenwand der Kokille erstellt werden, insbesondere ein Bild der im Wesentlichen vollständigen Innenwand der Kokille.

In einer Ausführungsform weist die Prüfvorrichtung eine Bewegungssteuerung zum Steuern der Bewegung des Gehäuses durch die Kokille und zur Synchronisation der Bewegung des Gehäuses mit den erzeugten Bilddaten auf. Die Bewegungssteuerung kann dazu ausgelegt und vorgesehen sein, das Gehäuse mit einer vorbestimmten Geschwindigkeit und vorbestimmten Bewegungsrichtung durch die Kokille zu bewegen. Diese Bewegung wird synchronisiert mit dem Zeitpunkt der Erzeugung der Bilddaten durch die zumindest eine Digitalkamera. Diese Synchronisation ermöglicht und/oder vereinfacht ein Zusammensetzen der erzeugten Bilddaten zu einem vollständigen Bild der Innenwände der Kokille. Insbesondere kann über die Bewegungssteuerung bei Erzeugung einer Aufnahme die exakte Position zu den digital erzeugten Bilddaten gespeichert werden und anschließend beim Zusammensetzen der Bilddaten zu einem Bild der Innenwände berücksichtigt werden.

In einer Weiterbildung dieser Ausführungsform ist die Bewegung des Gehäuses durch die Kokille mittels der Bewegungssteuerung in zwei einander entgegengesetzte Bewegungsrichtungen steuerbar, wobei das Erzeugen von Bilddaten einer Innenwand der Kokille abhängig ist von der Bewegungsrichtung des Gehäuses durch die Kokille. Die zwei einander entgegengesetzten Bewegungsrichtungen können insbesondere eine Bewegungsrichtung des Gehäuses vom Einlassende der Kokille bis zum Auslassende der Kokille und wieder zurück sein. Abhängig von der Bewegungsrichtung durch die Kokille können Bilddaten einer bzw. zweier unterschiedlicher Innenwände der Kokille von der zumindest einen Digitalkamera erzeugt werden. Dadurch ist das Erzeugen der Bilddaten abhängig von der Bewegungsrichtung des Gehäuses. Bei dieser Bewegungssteuerung werden besonders vorteilhaft und effizient Bilddaten erzeugt, die zu qualitativ hochwertigen Bildern der Innenwände zusammengesetzt werden können.

Gemäß einer Ausführungsform ist in dem Gehäuse zumindest ein transparentes Sichtfenster ausgebildet, durch das die Bilddaten von der zumindest einen Digitalkamera erzeugbar sind. Das Sichtfenster kann zum Beispiel aus einem Glas ausgebildet sein und ist zumindest für diejenigen Wellenlängen im Wesentlichen transparent, in denen von der Digitalkamera Bilddaten erzeugt werden. Das Sichtfenster kann somit insbesondere im sichtbaren Wellenlängenbereich transparent ausgebildet sein. Das Sichtfenster kann als ein transparentes Sichtfenster im gesamten Gehäuse, also umlaufend um alle Seitenwände des Gehäuses ausgebildet sein. Das Gehäuse kann auch mehrere solcher Sichtfenster aufweisen, zum Beispiel für jede Innenwand der Kokille ein zugeordnetes Sichtfenster. Hierbei können die einzelnen Sichtfenster zumindest teilweise auf unterschiedlichen Höhen des Gehäuses angeordnet sein. Durch die Sichtfenster kann die Digitalkamera geschützt im Inneren des Gehäuses angeordnet sein und aus dieser sicheren Position hinaus Aufnahmen von den Innenwänden der Kokille anfertigen.

In einer Weiterbildung dieser Ausführungsform weist das transparente Sichtfenster einen Dampfreduzierer auf. Der Dampfreduzierer dient zur Reduktion bzw. zum Verhindern von Dampfbildung an den Sichtfenstern, insbesondere aufgrund eines Kühlwassers für die Stahlstränge bzw. Kokillen. Die Dampfreduzierer können als entsprechende Beschichtungen des bzw. der transparenten Sichtfenster ausgebildet sein. Alternativ oder zusätzlich kann der Dampfreduzierer als Heizung ausgebildet sein. So kann das bzw. die Sichtfenster beheizbar ausgebildet sein, um einen Temperaturunterschied zwischen den Gehäusewänden und dem Innenraum der Kokillen auszugleichen und dadurch ein Beschlagen der Sichtfenster zu reduzieren. Dadurch wird sichergestellt, dass die Sichtfenster selbst bei Einsatz in heißen Kokillen transparent bleiben.

Gemäß einer Ausführungsform weist die Prüfvorrichtung eine Beleuchtung für jede Innenwand der Kokille auf. Jede Beleuchtung jeder Innenwand kann ein oder mehrere Lichtquellen aufweisen, die die jeweils zugeordnete Innenwand beleuchten. Dabei ist die Beleuchtung dafür ausgebildet und vorgesehen, zumindest den Teil der jeweiligen Innenwand zu beleuchten, auf den die effektive optische Achse der jeweils zugeordneten Digitalkamera gerade gerichtet ist. Durch die Beleuchtung wird somit die Qualität der Bilddaten verbessert. Die Beleuchtung kann insbesondere als eine oder mehrere LEDs ausgebildet sein, die besonders energiesparend sind und besonders gleichmäßiges Licht erzeugen, was zu einer einheitlichen Bildqualität führt. Die Beleuchtung kann an und/oder in Vertiefungen im Gehäuse und somit leicht beabstandet von den Innenwänden angeordnet sein. Dadurch kann eine besonders regelmäßige und vorteilhafte Beleuchtung der Innenwände bewirkt werden.

In einer Weiterbildung dieser Ausführungsform beleuchtet die Beleuchtung jede Innenwand unter einem Lichteinfallswinkel zwischen etwa 45°C und etwa 90°C zur Normalen auf die jeweilige Innenwand und/oder weist zumindest eine blaue LED auf. Ein Lichteinfallswinkel von etwa 45° bis beinahe 90° zur Normalen auf die jeweilige Innenwand bewirkt eine starke Schattenbildung in den Bilddaten, die zur Erkennung von Unebenheiten dient. Ein solch hoher Lichteinfallswinkel bewirkt somit eine Art "3D-Effekt", bei dem Unebenheiten an den Innenwänden der Kokillen besonders deutlich sichtbar werden. Dabei bietet sich eine Beleuchtung unter einem hohen Lichteinfallswinkel von zumindest 45° an. Bevorzugt liegt der Lichteinfallswinkel zwischen etwa 60° und etwa 85° zur Normalen auf die Innenwand. Weiterhin haben Tests ergeben, dass sich insbesondere Licht von blauen LEDs gut zum Lokalisieren von Unebenheiten an den Kokillenwänden eignet, dessen Wellenlänge besonders weit innerhalb des sichtbaren Wellenlängenspektrums vom roten entfernt ist.

Gemäß einer Ausführungsform weist die Prüfvorrichtung zumindest einen Abstandsensor zur Detektion eines Abstands zumindest einer Innenwand der Kokille von der Prüfvorrichtung auf. Der Abstandsensor kann in oder am Gehäuse angeordnet sein. Bevorzugt weist die Vorrichtung zumindest einen Abstandsensor zum Überprüfen des Abstands zu jeder der zum Beispiel vier Innenwände der Kokille auf. Die Abstandsensoren dienen zum Detektieren einer Verformung der Kokillenwände und können bei einer Auswertung der Prüfergebnisse berücksichtigt werden. Die Abstandsensoren erzeugen dabei Abstandsdaten, die auswertbar sind. Als besonders günstig hat sich dabei ergeben, für jede Innenwandseite zumindest drei Abstandsensoren zur Triangulation vorzusehen. Verformungen der Innenwände der Kokille können aufgrund der großen Hitze im Inneren der Kokille auftreten und in den Bilddaten selber nicht unmittelbar zu erkennen sein. Dadurch verbessert die Verwendung von Abstandsensoren die Überprüfung der Kokillen, insbesondere durch die Möglichkeit, Verformungen festzustellen.

Gemäß einer Ausführungsform ist das Gehäuse dicht gemäß Schutzklasse IP65 ausgebildet. Schutzklasse IP65 ist z.B. in DIN EN 60529:2014-09 definiert. Dazu kann das Gehäuse diverse Dichtungen wie z.B. Dichtlippen aufweisen, die ein Eindringen von Staub und Spritzwasser bzw. Dampf in das Innere des Gehäuses verhindern. Dadurch wird die Optik im Inneren des Gehäuses, wie z.B. die zumindest eine Digitalkamera und gegebenenfalls vorhandene Umlenkelemente von den extremen Bedingungen im Inneren der Kokille geschützt. Dadurch erhöht sich die Bildqualität und somit die Qualität der Überprüfung.

Ein zweiter Aspekt betrifft ein Prüfsystem zum Prüfen einer Kokille mit einer Prüfvorrichtung gemäß dem ersten Aspekt und einer Auswerteinheit zum Auswerten und/oder Überprüfen der erzeugten Bilddaten. Die Auswerteinheit kann einen Prozessor beinhalten und zum Beispiel als ein Computer und/oder Computerprogrammprodukt ausgebildet sein. Durch die Auswerteinheit können die erzeugten Bilddaten zu einem Bild jeder der Innenwände zusammengesetzt werden. Das Prüfsystem kann weiterhin eine Anzeige wie z.B. ein Display aufweisen, auf dem aus den Bilddaten zusammengesetzte Bilder der Innenwände der Kokille angezeigt werden können. Zudem kann die Auswerteinheit Abstandsdaten von gegebenenfalls vorhandenen Abstandsensoren der Prüfvorrichtung auswerten und gegebenenfalls am Display anzeigen. Die Auswerteinheit kann beim Erstellen der Bilder Positionsdaten verwenden, die von einer gegebenenfalls vorhandenen Bewegungssteuerung der Prüfvorrichtung bereitgestellt werden und mit den Bilddaten synchronisiert sein können. Die Bewegungssteuerung kann, ebenso wie die ggf. vorhandene Umlenkelementsteuerung, durch ein Computerprogrammprodukt bereitgestellt werden, insbesondere ein auf demselben Prozessor wie die Auswerteinheit laufendes Computerprogrammprodukt.

Ein dritter Aspekt betrifft ein Verfahren zum Prüfen einer Kokille mit mehreren Innenwänden mit den Schritten:
- Bewegen eines Gehäuses durch die Kokille und
- Erzeugen von Bilddaten jeder Innenwand der Kokille mittels zumindest einer in einem Gehäuse angeordneten Digitalkamera während der Bewegung des Gehäuses durch die Kokille.

Das Verfahren kann insbesondere mit einer Prüfvorrichtung gemäß dem ersten Aspekt und/oder einem Prüfsystem gemäß dem zweiten Aspekt durchgeführt werden. Deswegen betreffen alle Ausführungen sowie alle Ausführungsformen des ersten und zweiten Aspekts auch das Verfahren gemäß dem dritten Aspekt.

Gemäß einer Ausführungsform des Verfahrens wird das Gehäuse nacheinander in zwei einander entgegengesetzte Bewegungsrichtungen durch die Kokille bewegt, wobei die Bilddaten von den Innenwänden der Kokille in Abhängigkeit von der jeweiligen Bewegungsrichtung des Gehäuses erzeugt werden.

Gemäß einer Ausführungsform wird das Gehäuse während einer Gießpause zwischen zwei Gießsequenzen durch die Kokille bewegt. Dabei kann sich die Kokille noch in der Gießposition befinden. Wie bereits oben ausgeführt, bewirkt diese Überprüfung während der (z.B. fünfzehnminütigen Gießpause) zwischen zwei Gießsequenzen eine optimierte und häufige Überprüfung der Kokille.

Die Prüfvorrichtung gemäß dem ersten Aspekt kann dazu ausgebildet und vorgesehen sein, während der Gießpause nicht nur zur Überprüfung einer einzelnen Kokille verwendet zu werden, sondern zur Überprüfung mehrerer Kokillen. Dazu ist die Prüfvorrichtung, genauer gesagt, das Gehäuse der Prüfvorrichtung, durch mehrere Kokillen bewegbar, zum Beispiel mehrere Kokillen mit dem gleichen bzw. ähnlichen Innendurchmesser und des im Wesentlichen gleichen Querschnitts.

Die Erfindung wird nachfolgend anhand von in Figuren dargestellten Ausführungsformen näher beschrieben. Einzelne, in den Figuren gezeigte Merkmale können in anderen Ausführungsformen implementiert werden. Es zeigen:
- Figur 1: eine perspektivische Darstellung einer Prüfvorrichtung in einer ersten Betriebsposition auf einer Kokille in Gießposition;
- Figur 2A: einen Querschnitt durch eine Prüfvorrichtung in einer ersten Betriebsposition, in der ein Gehäuse der Prüfvorrichtung auf einer Kokille angeordnet ist;
- Figur 2B: einen Querschnitt durch eine Prüfvorrichtung in einer zweiten Betriebsposition, in der ein Gehäuse der Prüfvorrichtung in einer Kokille angeordnet ist;
- Figur 3: eine perspektivische Darstellung eines Gehäuses einer Prüfvorrichtung;
- Figur 4: eine schematische Schnittdarstellung durch eine untere Gehäuseeinheit einer Prüfvorrichtung, die durch eine Kokille bewegt wird;
- Figur 5: eine Fotografie einer Innenwand einer Kokille auf Höhe des Gießspiegels und
- Figur 6: in einem Diagramm eine Temperaturentwicklung am Sichtfenster einer Prüfvorrichtung beim Messen.

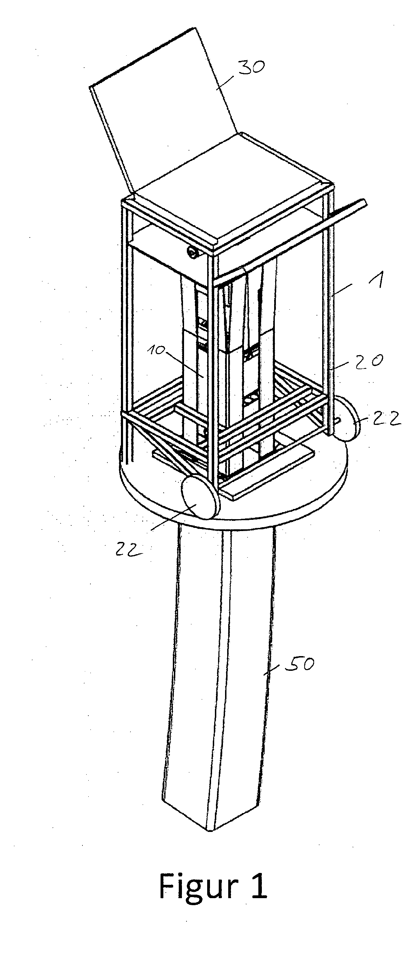

**Figur 1** zeigt eine Prüfvorrichtung 1 in einer perspektivischen Darstellung auf einer Kokille 50. Die Prüfvorrichtung 1 weist ein Gestell 20 auf, innerhalb dessen ein Gehäuse 10 angeordnet ist, das in die Kokille 50 herabgelassen werden kann. Das Gestell 20 weist weiterhin Rollen 22 auf, auf denen das Gestell 20 rollend bewegt werden kann, so dass es genau über der in vertikaler Gießposition angeordneten Kokille 50 angeordnet werden kann.

In Figur 1 ist weiterhin ein Computer 30 der Prüfvorrichtung 1 dargestellt, der als Auswerteinheit, Bewegungssteuerung, Umlenkelementsteuerung und/oder Anzeige der Prüfvorrichtung 1 ausgebildet sein kann und/oder verwendbar ist.

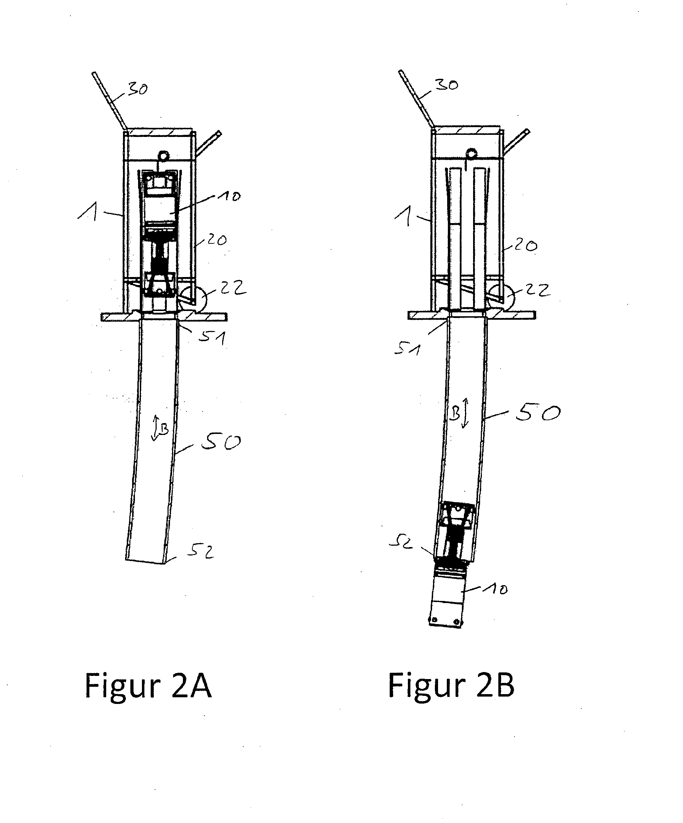

**Figur 2A** zeigt einen Querschnitt durch die Prüfvorrichtung 1 in einer ersten Betriebsposition der Prüfvorrichtung, in der das Gehäuse 10 oberhalb der Kokille 50 angeordnet ist.

**Figur 2B** zeigt einen Querschnitt durch die Prüfvorrichtung 1 in einer zweiten Betriebsposition der Prüfvorrichtung 1, in der das Gehäuse 10 bis zu einem Umkehrpunkt in die Kokille 50 eingedrungen ist.

Die Prüfvorrichtung 1 ist dazu ausgebildet und vorgesehen, während einer Gießpause zwischen zwei Gießzyklen der Kokille 50 die Kokille 50 zu überprüfen. Dabei kann die Kokille 50 noch in einer Gießposition angeordnet sein, d.h. im Wesentlichen vertikal angeordnet sein, wobei ein Einlassende 51 der Kokille 50 im Wesentlichen vertikal oberhalb eines Auslassendes 52 der Kokille angeordnet ist. Die Kokille 50 weist einen im Wesentlichen rechteckigen, hohlen Innenraum auf, in dem ein Stahlstrang gegossen werden kann. Dabei wird Stahl in das Einlassende der Kokille 50 eingebracht, innerhalb der Kokille abgekühlt und dabei in eine längliche, im Wesentlichen quaderförmige Form gegossen und anschließend aus dem Auslassende 52 aus der Kokille herausbewegt. Die Kokille kann dabei eine leichte Biegung aufweisen und/oder leicht konisch ausgebildet sein.

In der in Figur 2A gezeigten ersten Betriebsposition der Prüfvorrichtung 1 ist die Prüfvorrichtung 1 und insbesondere das Gehäuse 10 vertikal über dem Einlassende 51 der Kokille 50 angeordnet. Aus dieser ersten Betriebsposition der Prüfvorrichtung 1 hinaus kann das Gehäuse 10 in die Kokille 50 hinein bewegt werden entlang einer Bewegungsrichtung B. Während der Prüfung durchfährt das Gehäuse 10 die Kokille 50 vollständig vom Einlassende 51 bis zum Auslassende 52. Die Position des Gehäuses 10 am Auslassende 52 entspricht der in Figur 2B gezeigten zweiten Betriebsposition der Prüfvorrichtung 1, bei der das Gehäuse 10 an seinem Umkehrpunkt am Auslassende 52 angeordnet ist und sogar teilweise aus dem Auslassende 52 herausragt. Anschließend kann das Gehäuse 10 immer noch im Inneren der Kokille 50 entgegen der ersten Bewegungsrichtung wieder zurück vom Auslassende 52 zum Einlassende 51 bewegt und aus diesem heraus nach oben ins Innere des Gestells 20. Eine erste der Bewegungsrichtungen B entspricht dabei der Gießrichtung des Stahlstrangs durch die Kokille 50. Die zweite Bewegungsrichtung B entspricht dabei genau der entgegengesetzten Gießrichtung durch die Kokille.

Die Prüfvorrichtung 1 ist dazu ausgebildet und vorgesehen, während sich das Gehäuse 10 durch die Kokille 50 bewegt und/oder während es in der Kokille 50 angeordnet ist, Bilddaten zu erzeugen von den Innenwänden der Kokille 50.

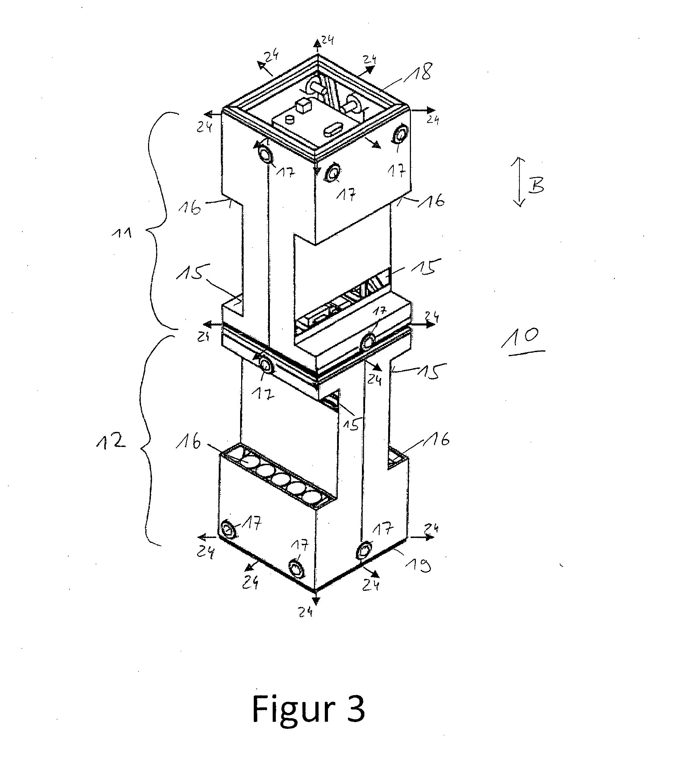

**Figur 3** zeigt in einer perspektivischen Darstellung das Gehäuse 10 der Prüfvorrichtung 1 ohne Kokille und ohne Gestell 20. Das Gehäuse 10 ist im Wesentlichen quaderförmig ausgebildet mit einem im Bezugssystem der Erde oben angeordneten Kopfende 18, mit einem im Bezugssystem der Erde unten angeordneten Fußende 19, und mit vier im Bezugssystem der Erde seitlich angeordneten Seitenwänden. In jeder der vier Seitenwände des Gehäuses 10 ist jeweils ein transparentes Sichtfenster 15 angeordnet, durch das eine im Inneren des Gehäuses 10 angeordnete Digitalkamera Bilddaten der Innenwände der Kokille 50 erzeugen kann. Das Gehäuse 10 ist im Wesentlichen zweiteilig ausgebildet und weist eine obere Gehäuseeinheit 11 und eine untere Gehäuseeinheit 12 auf. Jede der beiden Gehäuseeinheiten 11 und 12 weist jeweils eine Digitalkamera und ein Umlenkelement auf, sowie zwei Sichtfenster 15, die jeweils gegenüberliegenden Innenwänden der Kokille zugeordnet sind. Die beiden Gehäuseeinheiten 11 und 12 stellen somit zwei Aufnahmeeinheiten der Prüfvorrichtung 1 bereit, mit denen Bilddaten jeweils zweier unterschiedlicher Innenwände der Kokille 50 erzeugt werden können.

Weiterhin weist das Gehäuse Beleuchtungen 16 auf, mit denen die Innenwände der Kokille beleuchtbar sind. Die Sichtfenster 15 sowie die Beleuchtungen 16 sind an Vertiefungen des Gehäuses 10 ausgebildet und somit etwas mehr von den Innenwänden der Kokillen beabstandet als die übrigen Gehäuseaußenwände des Gehäuses 10.

Das Gehäuse 10 weist weiterhin eine Mehrzahl von Abstandsensoren 24 auf, die an den vier Seitenwänden des Gehäuses 10 angeordnet sind.

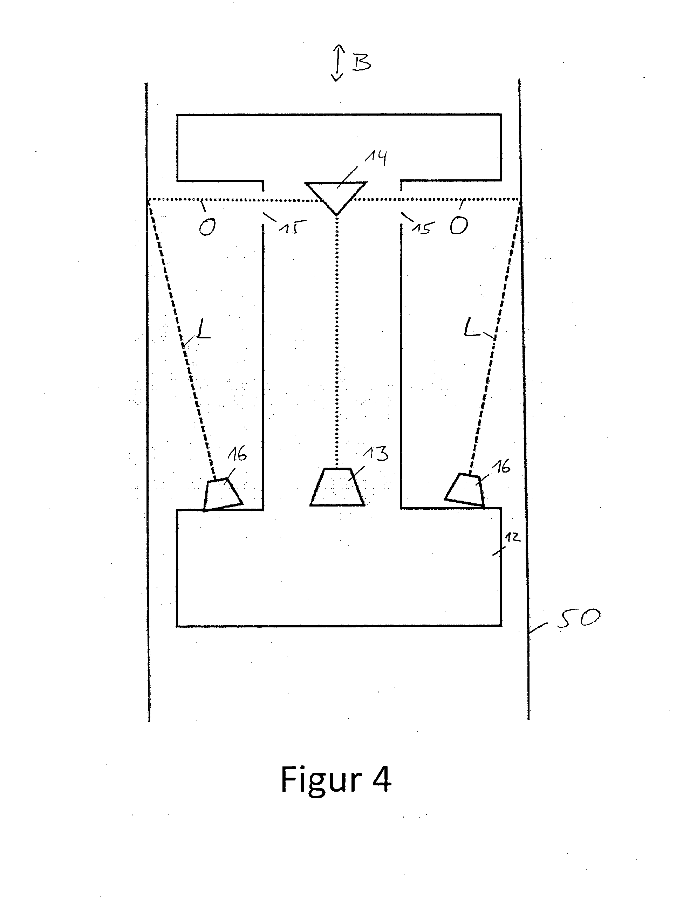

**Figur 4** zeigt eine schematische Schnittdarstellung durch die untere Gehäuseeinheit 12 der Prüfvorrichtung 1, während das Gehäuse 10 in der Kokille 50 angeordnet ist und/oder durch diese bewegt wird.

Die untere Gehäuseeinheit 12 weist im Wesentlichen in der Querschnittsmitte des Gehäuses eine Digitalkamera 13 auf, deren optische Achse im Wesentlichen parallel zur Bewegungsrichtung B ausgerichtet ist. Auf Höhe der transparenten Sichtfenster 15 ist ein Umlenkelement 14 ausgebildet, das z.B. als ein Trapezspiegel ausgebildet sein kann. Das Umlenkelement ist verstellbar, und zwar in eine seitliche, horizontale Richtung verschiebbar ausgebildet. Je nach Position des Umlenkelements 14 wird die optische Achse der Digitalkamera 13 entweder auf die in Figur 4 links dargestellte Innenwand der Kokille 50 umgelenkt, oder auf die in Figur 4 rechts dargestellte Innenwand der Kokille 50. Dieser letzte Teil der optischen Achse der Digitalkamera 13 wird als "effektive optische Achse" O bezeichnet, also den Teil der optischen Achse, der auf eine Innenwand der Kokille 50 trifft. Die effektive optische Achse O trifft dabei im Wesentlichen senkrecht auf die Innenwand der Kokille 50. Abhängig von der Einstellposition des Umlenkelements 14 können entweder von der linken oder von der rechten Innenwand der Kokille Bilddaten erzeugt werden, und zwar von derselben Digitalkamera 13.

Weiterhin sind in Figur 4 schematisch die Beleuchtungen 16 gezeigt, die zum Beispiel als LEDs ausgebildet sein können. Die Beleuchtungen 16 sind so angeordnet, dass sie die Kokilleninnenwände zumindest an den Stellen beleuchten, auf die die effektive optische Achse O aktuell gerichtet ist. Die Beleuchtungen 16 bewirken eine gleichmäßige Ausleuchtung und/oder Helligkeit der aufgenommenen Bilddaten. Dabei erfolgt die Belichtung der Innenseiten der Kokille 50 unter einem großen Winkel von der Seite, wobei sich ein Schatteneffekt ergibt, der die Innenwände der Kokille "dreidimensional" erscheinen lässt. Dadurch wird ein visuelles Auswerten und Beurteilen der Innenseiten der Kokille 50 unterstützt und verbessert. Bei dieser Art der Beleuchtung kann eine automatische und/oder halbautomatische Auswertung der Innenseiten der Kokille unter Detektion vorbestimmter, bekannter Defektarten realisiert werden.

Ein zentraler Lichtstrahl bzw. eine Lichtachse der Beleuchtungen 16 ist in dem gezeigten Ausführungsbeispiel in eine Lichteinfallsrichtung L ausgerichtet, entlang der das Licht auf die Innenwände der Kokille trifft. Die Lichteinfallsrichtung L weist dabei einen relativ großen Lichteinfallswinkel zum Lot auf die Innenseite der zugeordneten Kokille auf. Dabei entspricht der Lichteinfallswinkel im Wesentlichen dem in Figur 4 gezeigten Winkel zwischen der Lichteinfallsrichtung L und der effektiven optischen Achse O. Der Lichteinfallswinkel kann z.B. zwischen 60 und 85° betragen.

Die obere Gehäuseeinheit 11 ist in Figur 4 nicht gezeigt und im Wesentlichen baugleich und symmetrisch zur unteren Gehäuseeinheit ausgebildet, jedoch einmal auf den Kopf gedreht und zugleich im Uhrzeigersinn um eine Innenwand der Kokille, also um 90°, verdreht angeordnet. So weist die Kameraöffnung der Digitalkamera 13 der oberen Gehäuseeinheit 11 im Wesentlichen auf die Kameraöffnung der Digitalkamera 13 der unteren Gehäuseeinheit 12 und umgekehrt. In etwa in der Mitte zwischen den beiden Digitalkameras 13 sind die beiden Umlenkelemente 14 angeordnet, die die optische Achse der jeweils zugeordneten Digitalkamera 13 um etwa 90° Umlenken zur effektiven optischen Achse O. Das gesamte Gehäuse 10 mit beiden Gehäuseeinheiten 11, 12 ist in Fig. 3 gezeigt.

Zur Überprüfung der Kokille 50 wird die Prüfvorrichtung 1 mit Hilfe des auf den zwei Rädern 22 fahrbaren Gestells 20 ähnlich einer Sackkarre über der Kokille 50 angeordnet. Anschließend wird das Gehäuse 10 gezielt in die Kokille 50 herabgelassen. Das Gehäuse 10 kann wie eine Kapsel verschlossen sein und weist insgesamt zwei Digitalkameras 13 auf, die als Zeilenkameras ausgebildet sein können und über zwei Umlenkelemente 14 jeweils zwei Innenwände der Kokille 50 während der Abwärtsbewegung des Gehäuses 10 abscannen, und zwei andere Innenwände während der Aufwärtsbewegung des Gehäuses 10. Dies ermöglicht eine Ablichtung zweier Innenwände während der Abwärtsbewegung des Gehäuses 10, und nach Umstellung der Umlenkelemente 14 am Umkehrpunkt des Gehäuses die jeweils gegenüberliegenden Innenwände während der Aufwärtsbewegung des Gestells 10.

Die transparenten Sichtfenster 15 schützen das Innere des Gehäuses 10 und ermöglichen ein Aufnehmen von Bilddaten aller vier Innenwände der Kokille aus dem Inneren des Gehäuses 10 heraus. Die Sichtfenster 15 können dabei mit einer Heizung versehen sein, die als elektrisch geregelte Beschichtung der Gläser ausgebildet sein kann. Die Umlenkelemente 14 können als Trapezspiegel ausgebildet sein und z.B. mit Hilfe einer Magnetsteuerung zwischen zwei Positionen verschiebbar ausgebildet sein, von denen eine Position zur Umlenkung der optischen Achse einer Digitalkamera auf eine erste Innenwand geeignet ist, und die zweite zur Umlenkung auf die gegenüberliegende Innenwand. Dies kann durch eine Verschiebung des Trapezspiegels um ca. 20mm im Inneren des Gehäuses 10 erfolgen. So kann zum Beispiel die obere Digitalkamera 13 jeweils zur Aufnahme von Bilddaten der rechten und linken Innenwand der Kokille ausgebildet sein, während die untere Kamera zur Erzeugung von Bilddaten der hinteren und vorderen Innenwand der Kokille ausgebildet ist oder umgekehrt. Mit dieser Anordnung der Umlenkelemente und Digitalkameras können alle vier Innenwände der Kokille 50 während der zwei Fahrwege durch die Kokille 50 aufgenommen werden, also während der Auf- und der Abbewegung.

Während der Bewegung des Gehäuses 10 durch die Kokille 50 kann ein Drehgeber und/oder ein optischer Sensor mit Drehgeberausgang mitgeführt werden, mittels dessen eine Bewegungssynchronisation des Gehäuses 10 erfolgt. So kann der Drehgeber bzw. der optische Sensor äquidistante Pulse zur Synchronisation der Digitalkameras 13 mit der Bewegung des Gehäuses 10 durch die Kokille erzeugen. Dadurch kann eine pixelgenaue Positionszuordnung der erzeugten Bilddaten und somit eine genaue Aufnahme der Innenseite der Kokillen erfolgen. Dies erleichtert insbesondere bei Verwendung von Zeilenkameras ein Erstellen eines zusammengesetzten Bildes der Innenwand der Kokille, insbesondere der vollständigen vier Innenwände der Kokille.

Zur Beurteilung der Oberflächeneigenschaften aller vier Innenwände der Kokille 50 können die erzeugten Bilddaten in vier Innenwandbildern dargestellt werden, von denen jeweils ein Innenwandbild eine Innenwand der Kokille darstellt. Diese vier Innenwandbilder können zum Beispiel nebeneinander angezeigt werden, zum Beispiel auf dem Bildschirm des Computers 30. Insbesondere der Gießspiegel der Kokille 50 kann so rundum begutachtet und geprüft werden und zum Beispiel mit älteren Aufnahmen verglichen werden.

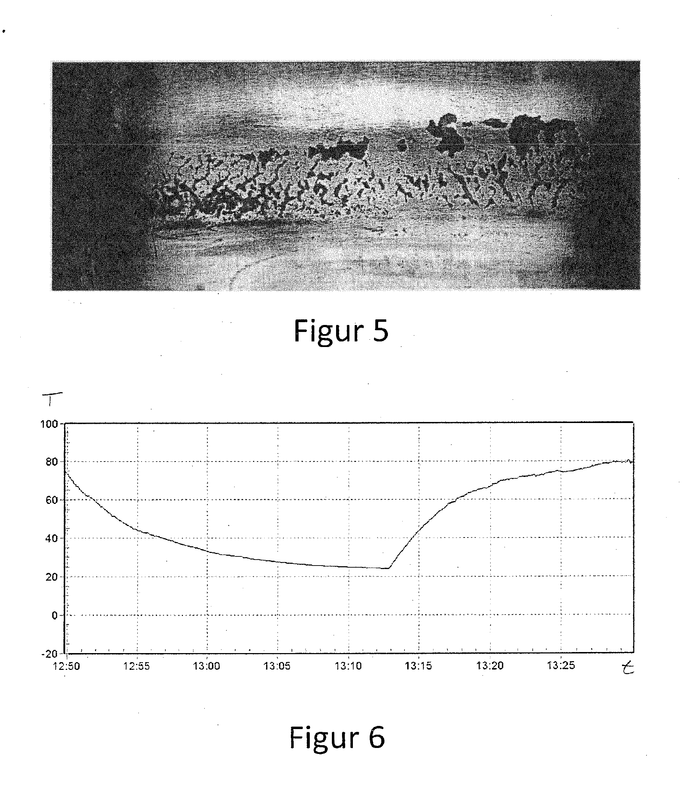

**Figur 5** zeigt eine mit der Prüfvorrichtung 1 aufgenommene Aufnahme eines solchen Gießspiegels an der Innenwand einer Kokille. Figur 5 zeigt somit eine mit Bilddaten erzeugte Fotografie. Die Fotografie zeigt nicht die komplette Innenwand der Kokille, sondern lediglich den beim Stranggießen besonders beanspruchten Gießspiegel. Ein Vergleich mit älteren Bilddaten kann Veränderungen der Innenwände der Kokillen aufzeigen und dokumentieren. Dies ermöglicht eine effiziente und/oder schnelle Beurteilung zeitlicher Veränderungen, zum Beispiel Veränderungen über die letzten Gießsequenzen der Kokille 50.

Zusätzlich zu einer visuellen Überprüfung und/oder Beurteilung durch einen Menschen kann eine halbautomatische oder vollautomatische Erfassung und/oder Ausweitung von Oberflächenstrukturen der Innenwände der Kokille 50 erfolgen. So können insbesondere bei einer halbautomatischen Auswertung bestimmte Oberflächenstrukturen einem Betrachter markierte Positionen in den Bilddaten als vorausgewertete Informationen bereitgestellt werden. Alternativ oder zusätzlich kann die Auswertung auch vollautomatisch durchgeführt werden.

Mit Hilfe der Abstandsensoren 24 kann eine genaue Vermessung der Kokillengeometrie erfolgen. Dabei sind an jeder Seitenwand des Gehäuses 10, also an allen vier Seitenwänden des im Wesentlichen quaderförmigen Gehäuses 10 bis auf die Wand am Kopfende 18 und am Fußende 19, eine Mehrzahl solcher Abstandsensoren 24 angeordnet. Insbesondere können an jeder Seitenwand drei, sechs oder neun Abstandsensoren 24 angeordnet sein. Mit Hilfe der von den Abstandsensoren 16 erzeugten Abstandsdaten kann der Querschnitt und die Konizität der Kokille 50 erfasst und ausgewertet werden. Dabei kann insbesondere eine relative Messung der Konizität der Kokille erfolgen, was als ein wesentliches Maß für einen notwendigen Austausch der Kokille 50 verwendet werden kann. So kann sich die Kokille speziell am Gießspiegel wölben, da es dort am heißesten in der Kokille 50 ist. Eine solche Bauchigkeit kann zum Beispiel mittels Lasertriangulationsensoren erfasst werden. Dazu können insbesondere pro Seitenwand des Gehäuses 10 drei oder sechs Abstandsensoren 24 verwendet werden, die mittels Lasertriangulation die beiden aufeinander senkrecht stehenden Durchmesser der Kokille, also die Abstände von gegenüberliegenden Innenwänden der Kokille 50 zu ermitteln.

Die Auswertung der Abstandsdaten kann unter Berücksichtigung der Temperatur der Kokille 50 und/oder des Gehäuses 10 erfolgen. Dazu kann die Prüfvorrichtung 1 ein Mittel zur Temperaturerfassung aufweisen wie zum Beispiel ein Thermometer. Über dieses Mittel zur Temperaturerfassung kann die Temperatur des Gehäuses ermittelt werden und bei der Auswertung der Abstandsdaten abhängig von der Temperatur eine Kompensation berücksichtigt werden, damit keine Ausdehnungseffekte des Materials die Messung beeinflussen. Hierbei können insbesondere die Durchmesser der Kokille zwischen den gegenüberliegenden Wandinnenseiten und deren Verlauf von oben nach unten in der Kokille 50 als relevanter Messwert verwendet werden, sowie die Krümmung der Kokille, die Position der Kokille, insbesondere am Auslassende 52, an dem der Strang für eine Kontrolle herkömmlicherweise nur schwer zugänglich ist.

In der Praxis treten Beschädigungen einer Kokille insbesondere auf, wenn beim Angießen von unten eine Kette an die Kokille 50 einfährt, die zunächst die Kokille verschließt und den Strang "abholt". Am Gießspiegel ist die thermische Belastung am größten, weswegen dort eine Beschichtung der Innenwände der Kokille relativ schnell abplatzen kann. Ein Geflecht aus Rissen in der Beschichtung der Innenwände der Kokille muss noch nicht sofort zum Austausch der Kokille führen. Bei einem Abplatzen von Teilchen zwischen den Rissen sollte jedoch umgehend ein Austausch der Kokille erfolgen. Aufgrund eines vertikalen Oszillierens der Kokille während des Gießens ist der Gießspiegel nicht etwa eine dünne Linie, sondern ein etwa 15 bis 20mm breiter Streifen, der üblicherweise beim Blick in eine gebrauchte Kokille sofort auffällt.

Die Prüfvorrichtung 1 ermöglicht einen Austausch der Kokille zielgerichtet genau dann, wenn Beschädigungen an der Beschichtung auftreten und/oder die Kokille sich zum Beispiel am Gießspiegel bauchig vergrößert.

Beim Prüfen der Kokille können weitere Mängel detektiert werden. So kann auch eine Positionsänderung und/oder eine Änderung der Konizität der Kokille einen Eingriff bedingen, um Schäden zu vermeiden. Wegen der Hitze des Gießprozesses und betriebsbedingten, möglichst kurzen Pausen zwischen den Gießzyklen bleiben Schäden an Kokillen zunächst oft unentdeckt und führen später im Schadensfalle oft zu einem ungeplanten Stillegen des entsprechenden Stranges, welches durch den entsprechenden Produktionsausfall hohe Kosten verursachen kann.

Am Gehäuse 10 können zusätzlich Pufferelemente 17 an den Seitenwänden ausgebildet sein, über die das Gehäuse 10 an den Kokilleninnenwänden abgestützt wird und/oder die eine Ausrichtung des Gehäuses 10 im Inneren der Kokille 50 ermöglichen.

Die Abstandsensoren 24 ermöglichen ein Vermessen der Kokille 50 in der Diagonalen sowie ein Vermessen der Abstände der nahezu parallelen, einander gegenüberliegenden Innenwände der Kokille 50. Weiterhin kann mit Hilfe der Abstandsensoren 24 die Konizität und die Krümmung der Kokille 50 vermessen werden, insbesondere, wenn jeweils drei Abstandsensoren entlang einer horizontalen Linie längs des Fahrwegs durch die Kokille zur Messung der Krümmung verwendet werden.

Wie in Figur 3 durch die Pfeile 24 gezeigt, sind sowohl am Kopfende 18 als auch am Fußende 19 jeweils drei Abstandsensoren 24 pro Seitenwand des Gehäuses 10 angeordnet, ebenso wie in einer mittleren Position am Gehäuse 10. Somit kann das Gehäuse 10 zum Beispiel insgesamt 24 Abstandsensoren aufweisen, jeweils acht pro Sensorebene, die mit den Pfeilen 24 gekennzeichnet ist. Dabei dienen die an den Ecken des Gehäuses 10 angeordneten Abstandsensoren 24 zum Erzeugen von Abstandsdaten zweier benachbarter Innenwände der Kokille bzw. der Ecken der Kokille.

Die Beleuchtungen 16 können als Lichtquellen ausgebildet sein, insbesondere als blaue LEDs, die auf Stahloberflächen einen besonders guten Kontrast bewirken. Dabei können die Lichtquellen Linsen aufweisen, die als industrieübliche Standardlinsen ausgebildet sind. Dabei erfolgt die Lichtabstrahlung unter einem möglichst kleinen Winkel zur Innenwand der Kokille und möglichst gleichmäßig, um eine plastische Darstellung der Oberfläche der Innenseiten der Kokille sowie gegebenenfalls vorhandenen Beschädigung zu ermöglichen. Zudem werden bei den verwendeten Lichteinfallswinkeln Spiegelungen in den Bilddaten vermieden und der Kontrast optimiert, insbesondere durch Schattenbildung.

Eine Kameraansicht im Lot auf die Oberfläche der Innenwände bei einem möglichst großen Abstand zur aufgenommenen Innenseite wird durch Verwendung des Umlenkelements 14 ermöglicht. Dabei bewirkt der möglichst große Abstand zur Innenwand eine Gleichmäßigkeit der Bilddaten und somit des Bildsignals.

**Figur 6** zeigt in einem Diagramm eine Temperaturentwicklung am Sichtfenster einer Prüfvorrichtung beim Überprüfen einer Kokille. Dabei ist auf der nach rechts weisenden Achse eine Zeit t von 12 Uhr 50 bis 13 Uhr 25 angegeben. Auf der vertikalen Achse ist eine Temperatur T von -20°C bis 100°C aufgetragen. In dem Diagramm ist ein Temperaturverlauf am Sichtfenster 15 der Prüfvorrichtung 1 gezeigt.

Gezeigt ist zunächst die Dauer der Abkühlung des Sichtfensters, also zum Beispiel eines Glases bei Raumtemperatur im Zeitraum zwischen etwa 12 Uhr 50 bis etwa 13 Uhr 13. Ab etwa 13 Uhr 13 beginnt die Prüfung einer neuen Kokille und es erfolgt eine Aufheizung des Glases bis zum Zeitpunkt 13 Uhr 30. Diese Temperatur kann sowohl beim Auswerten der Abstandsdaten berücksichtigt werden, als auch beim gesteuerten Beheizen der Sichtfenster, um ein Beschlagen der Sichtfenster 15 zu reduzieren und/oder zu verhindern.

Bevorzugt beträgt die Temperatur der Sichtfenster 15 von 60°C bis 80°C, da am Inspektionsort Temperaturen von bis zu 80°C am Boden zu erwarten sind. In der gekühlten Kokille sind üblicherweise Temperaturen von maximal etwa 50°C zu erwarten. Deswegen ist die Scheibe des Sichtfensters 15 bevorzugt auf einen Temperaturwert oberhalb von 50°C vorgeheizt beim Prüfen der Kokille, um ein Beschlagen der Sichtfenster 15 zu verhindern.

Somit ist sowohl die Prüfvorrichtung 1 insgesamt als auch insbesondere das Gestell 20 sowie die Rollen 22 dazu ausgelegt und vorgesehen, Temperaturen von bis zu 80°C standzuhalten. Gleiches gilt insbesondere für das Gehäuse 10, insbesondere auch für die Dichtigkeit des Gehäuses 10.

Dazu kann das Gehäuse 10 Gummilippen zur Dichtung aufweisen, die hitzebeständig sind.

Aufgrund des hohen Abstands zur Wand, also insgesamt der Länge der optischen Achse jeder Kamera 13, muss kein Weitwinkelobjektiv verwendet werden, das eine Verzerrung der Bilddaten bewirken könnte. Dazu wird, wie in Figur 3 gezeigt, die optische Achse zunächst parallel zur Bewegungsrichtung B im Inneren des Gehäuses 10 angeordnet, und anschließend um ca. 90°C abgelenkt am Umlenkelement 14. Dadurch kann ein effektiver Abstand zur Innenwand von ca. einem halben Meter erzielt werden.

### Bezugszeichenliste

- 1: Prüfvorrichtung
- 10: Gehäuse
- 11: obere Gehäuseeinheit
- 12: untere Gehäuseeinheit
- 13: Digitalkamera
- 14: Umlenkelement
- 15: Sichtfenster
- 16: Beleuchtung
- 17: Pufferelement
- 18: Kopfende
- 19: Fußende
- 20: Gestell
- 22: Rollen
- 24: Abstandsensor
- 30: Computer
- 50: Kokille
- 51: Einlassende
- 52: Auslassende

- B: Bewegungsrichtung
- L: Lichteinfallsrichtung
- O: effektive optische Achse

## Patentansprüche

1. Prüfvorrichtung (1) zum Prüfen einer Kokille (50) mit mehreren Innenwänden mit:
- einem Gehäuse (10), das durch die Kokille (50) bewegbar ist, und
- zumindest einer in dem Gehäuse (10) angeordneten Digitalkamera (13) zum Erzeugen von Bilddaten jeder Innenwand der Kokille (50), während das Gehäuse (10) im Inneren der Kokille (50) angeordnet ist.

2. Prüfvorrichtung nach Anspruch 1, mit einem Umlenkelement (14) zum Umlenken einer effektiven optischen Achse (O) der zumindest einen Digitalkamera (13) auf zumindest eine der Innenwände der Kokille (50).

3. Prüfvorrichtung nach Anspruch 2, wobei das Umlenkelement (14) so verstellbar ausgebildet ist, dass die effektive optische Achse (O) der zumindest einen Digitalkamera (13) durch das Umlenkelement (14) auf unterschiedliche Innenwände der Kokille (50) umlenkbar ist.

4. Prüfvorrichtung nach Anspruch 2 oder 3, wobei das Umlenkelement (14)
- im Wesentlichen in der Mitte des Gehäuses (10) angeordnet ist und/oder
- die effektive optische Achse (O) im Wesentlichen im Lot auf die Innenwände der Kokille (50) umlenkt.

5. Prüfvorrichtung nach einem der vorangegangenen Ansprüche, mit zumindest oder genau zwei Digitalkameras (13), wobei jeder Digitalkamera (13) ein verstellbares Umlenkelement (14) zugeordnet ist zum Umlenken der effektiven optischen Achse (O) der jeweiligen Digitalkamera (13) auf zwei unterschiedliche Innenwände der Kokille (50)
und/oder
wobei die zumindest eine Digitalkamera (13) als Zeilenkamera ausgebildet ist.

6. Prüfvorrichtung nach einem der vorangegangenen Ansprüche, mit einer Bewegungssteuerung zum Steuern der Bewegung des Gehäuses (10) durch die Kokille (50) und zur Synchronisation der Bewegung des Gehäuses (10) mit den erzeugten Bilddaten.

7. Prüfvorrichtung nach Anspruch 6, wobei die Bewegung des Gehäuses (10) durch die Kokille (50) mittels der Bewegungssteuerung in zwei einander entgegengesetzte Bewegungsrichtungen (B) steuerbar ist, und wobei das Erzeugen von Bilddaten einer Innenwand der Kokille (50) abhängig ist von der Bewegungsrichtung (B) des Gehäuses (10) durch die Kokille (50).

8. Prüfvorrichtung nach einem der vorangegangenen Ansprüche, wobei in dem Gehäuse (10) zumindest ein transparentes Sichtfenster (15) ausgebildet ist, durch das die Bilddaten von der zumindest einen Digitalkamera (13) erzeugbar sind.

9. Prüfvorrichtung nach Anspruch 8, wobei das transparente Sichtfenster (15) einen Dampfreduzierer aufweist.

10. Prüfvorrichtung nach einem der vorangegangenen Ansprüche, mit einer Beleuchtung (16) für jede Innenwand der Kokille (50).

11. Prüfvorrichtung nach Anspruch 10, wobei die Beleuchtung (16)
- jede Innenwand unter einem Lichteinfallswinkel zwischen etwa 45° und etwa 90° zur Normalen auf die jeweilige Innenwand beleuchtet und/oder
- zumindest eine blaue LED aufweist.

12. Prüfvorrichtung nach einem der vorangegangenen Ansprüche, mit zumindest einem Abstandsensor (24) zur Detektion eines Abstands zumindest einer Innenwand der Kokille (50) von der Prüfvorrichtung (1)
und/oder
wobei das Gehäuse (10) dicht gemäß Schutzklasse IP65 ausgebildet ist.

13. Prüfsystem zum Prüfen einer Kokille (50) mit:
- einer Prüfvorrichtung (1) nach einem der vorangehenden Ansprüche und
- einer Auswerteinheit (30) zum Auswerten und Überprüfen der erzeugten Bilddaten.

14. Verfahren zum Prüfen einer Kokille (50) mit mehreren Innenwänden mit den Schritten:
- Bewegen eines Gehäuses (10) durch die Kokille (50) und
- Erzeugen von Bilddaten jeder Innenwand der Kokille (50) mittels zumindest einer in einem Gehäuse (10) angeordneten Digitalkamera (13) während der Bewegung des Gehäuses (10) durch die Kokille (50).

15. Verfahren nach Anspruch 14, wobei das Gehäuse (10) nacheinander in zwei einander entgegengesetzte Bewegungsrichtungen (B) durch die Kokille (50) bewegt wird, und wobei die Bilddaten von den Innenwänden der Kokille (50) in Abhängigkeit von der jeweiligen Bewegungsrichtung (B) des Gehäuses (10) erzeugt werden
und/oder
wobei das Gehäuse (10) während einer Gießpause zwischen zwei Gießsequenzen durch die Kokille (50) bewegt wird.
